# EUROPEAN PATENT APPLICATION

(11) **EP 4 804 360 A1**
(43) Date of publication of application: **09.09.2026**
(21) Application number: 25185453.5
(22) Date of filing: 26.06.2025
(51) Int. Cl.: H02G 11/00, B60L 53/18, B60L 53/30

(54) **HOLDING MECHANISM AND CHARGING SYSTEM**

(30) Priority: 06.03.2025 TW 114108256
(71) Applicant: Wistron Corp., New Taipei City 22181 (TW)
(72) Inventor: WANG, Wan Xuan, 22181 New Taipei City (TW); YANG, Keng Hsien, 22181 New Taipei City (TW); CHEN, Weiting, 22181 New Taipei City (TW)
(74) Representative: Patentship Patentanwaltsgesellschaft mbH

(57) **Abstract**

A holding mechanism (100) is provided. The holding mechanism (100) includes a base (110) and a bracket (120). The bracket (120) is connected to the base (110). The bracket (120) is rotatable relative to the base (110). The holding mechanism (100) includes a connecting member (130) disposed between the base (110) and the bracket (120). The holding mechanism (100) also includes a supporting member (140) surrounding the bracket (120) and suitable for supporting the wire portion (60) of the electronic device (50). In addition, the holding mechanism (100) includes a plurality of first magnetic elements (150) disposed on the supporting member (140). In the stowed state, the first magnetic elements (150) are arranged in a linear direction. Accordingly, the electronic device (50) can be stretched and rotated in multiple directions, and the electronic device (50) can automatically return to its original position by the arrangement of first magnetic elements (150), thereby improving the convenience of using and restoring the electronic device (50).

## Description

### TECHNICAL FIELD

The disclosure is related to a holding mechanism and a charging system, and in particular is related to a holding mechanism and a charging system that include a plurality of first magnetic elements disposed on the supporting member.

### BACKGROUND

With the advancements being made in science and technology, there are more and more applications for electric vehicles. However, there is still room for improvement of the existing charging systems, in terms of storage and convenience of use. Therefore, how to overcome the above problem in a cost-effective way is an urgent issue.

### BRIEF SUMMARY

The present disclosure provides a holding mechanism, which includes a base and a bracket. The bracket is connected to the base and rotatable relative to the base. The holding mechanism includes a connecting member disposed between the base and the bracket. The holding mechanism also includes a supporting member surrounding the bracket and suitable for supporting the wire portion of the electronic device. In addition, the holding mechanism includes a plurality of first magnetic elements disposed on the supporting member.

The present disclosure provides a charging system. The charging system includes an electronic device, which includes a wire portion, and a holding mechanism. The includes a base and a bracket connected to the base and rotatable relative to the base. The holding mechanism includes a connecting member disposed between the base and the bracket. The holding mechanism also includes a supporting member disposed around the bracket and suitable for supporting the wire portion of the electronic device. In addition, the holding mechanism includes a plurality of first magnetic elements disposed on the supporting member.

### BRIEF DESCRIPTION OF THE DRAWINGS

The disclosure may be more fully understood by reading the subsequent detailed description and examples with references made to the accompanying drawings, wherein:
FIG. 1 illustrates a perspective view of a charging system in the stowed state in accordance with some embodiments of the present disclosure;
FIG. 2 illustrates an exploded view of the charging system in accordance with some embodiments of the present disclosure;
FIG. 3 illustrates a perspective view of the charging system in the stowed state in accordance with some embodiments of the present disclosure;
FIG. 4 illustrates a perspective view of the charging system in the stowed state in accordance with some embodiments of the present disclosure;
FIG. 5 illustrates a perspective view of the charging system in the using state in accordance with some embodiments of the present disclosure;
FIG. 6 illustrates a perspective view of a charging system in the stowed state in accordance with some embodiments of the present disclosure;
FIG. 7 illustrates an exploded view of the charging system in accordance with some embodiments of the present disclosure;
FIG. 8 illustrates a partial enlarged view of the charging system in accordance with some embodiments of the present disclosure; and
FIGS. 9A through 9C illustrate schematic views of various stages of operating the charging system in accordance with some embodiments of the present disclosure.

### DETAILED DESCRIPTION OF THE INVENTION

The holding mechanism of some embodiments of the present disclosure are described in the following description. However, it should be appreciated that the following detailed description of some embodiments of the disclosure provides various concepts of the present disclosure which may be performed in specific backgrounds that may vary widely. The specific embodiments disclosed are provided merely to clearly describe the usage of the present disclosure by some specific methods without limiting the scope of the present disclosure.

In addition, relative terms such as "down" or "bottom," "up" or "top" may be used in the following embodiments in order to describe the relationship between one element and another element in the figures. It should be appreciated that if the device shown in the figures is flipped upside-down, the element located on the "down" side may become the element located on the "up" side.

It should be understood that although the terms "first," "second," etc. may be used herein to describe various elements, materials and/or portions, these elements, materials and/or portions are not limited by the above terms. These terms merely serve to distinguish different elements, materials and/or portions. Therefore, a first element, material and/or portion may be referred to as a second element, material and/or portion without departing from the teaching of some embodiments in the present disclosure. Unless defined otherwise, the first or second element, material and/or portion in the claims may be interpreted as any element, material and/or portion in the specification as long as it conforms to the description in the claims.

Unless defined otherwise, all terms (including technical and scientific terms) used herein have the same meaning as commonly understood by one of ordinary skill in the art to which the present disclosure belongs. It should be appreciated that, in each case, the term, which is defined in a commonly used dictionary, should be interpreted as having a meaning that conforms to the relative skills of the present disclosure and the background or the context of the present disclosure, and should not be interpreted in an idealized or overly formal manner unless so defined in the present disclosure. In addition, the terms "substantially," "approximately" or "about" may also be recited in the present disclosure, and these terms are intended to encompass situations or ranges that is substantially or exact the same as the description herein. It should be noted that unless defined specifically, even if the above terms are not recited in the description, it should be read as the same meaning as those approximate terms are recited.

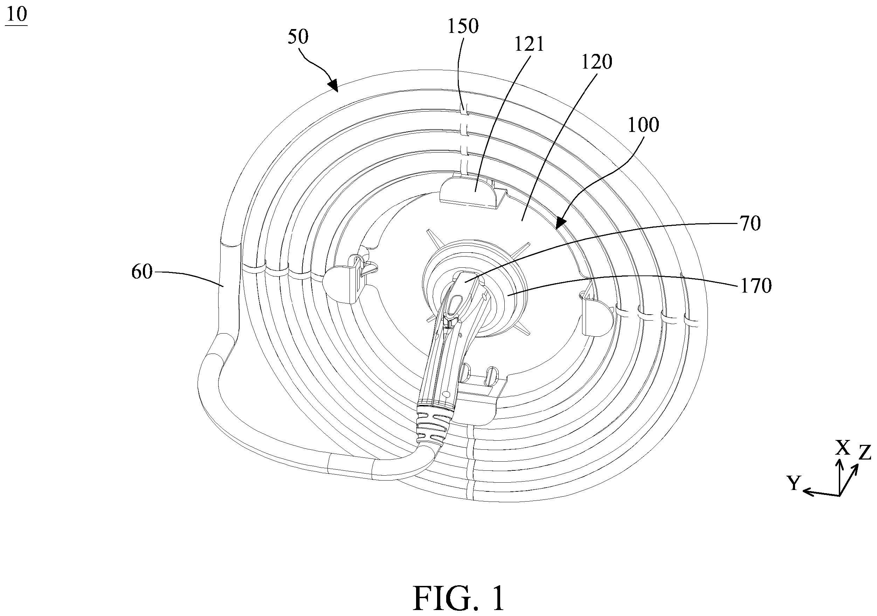

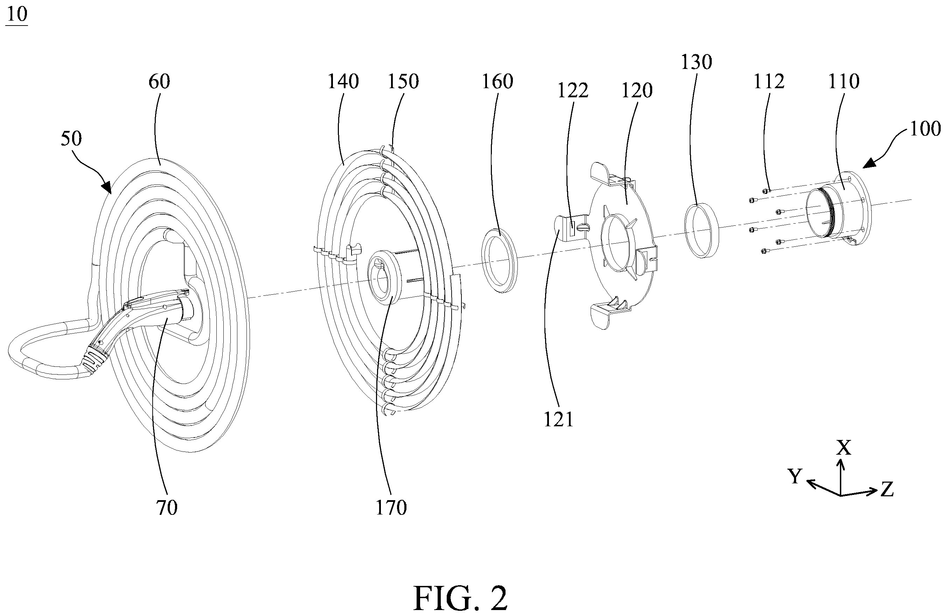

First, referring to FIG. 1 and FIG 2, FIG. 1 illustrates a perspective view of the charging system 10 in a stowed state in accordance with some embodiments of the present disclosure, and FIG. 2 is an exploded view of the charging system 10 in accordance with some embodiments of the present disclosure. It should be noted that the charging system 10 may include an electronic device 50 and a holding mechanism 100 suitable for holding the electronic device 50. For example, the electronic device 50 may be a charging device. In some embodiments, the electronic device 50 may include a wire portion 60 and an end portion 70 that are connected to each other, wherein the wire portion 60 can be electrically connected to a power source (not shown) and the end portion 70 can be installed and connected to a charging target (such as an electric motorcycle, car, bus, etc.). In this way, the user can charge the required charging target via the electronic device 50 so that the charging target can continue to operate. However, the present disclosure is not limited thereto. The charging system 10 may include any electronic device 50 that can supply power to a charging target or electrically connect to other devices to achieve various functions.

As shown in FIG. 1 and FIG. 2, the holding mechanism 100 includes a base 110, a bracket 120, a connecting member 130, a supporting member 140 and a plurality of first magnetic elements 150. In some embodiments, the base 110 can be affixed on a plane (for example, a wall) via fasteners 112. The bracket 120 is connected to the base 110 and is rotatable relative to the base 110. The connecting member 130 is disposed between the base 110 and the bracket 120, and is in direct contact with the base 110 and the bracket 120. In some embodiments, the connecting member 130 may include a plastic material and have smooth and wear-resistant properties, so that the bracket 120 is rotatable relative to the base 110 about a central axis (such as the Z-axis). For example, the connecting member 130 may be made of polytetrafluoroethylene (PTFE) or other suitable plastic materials, but the present disclosure is not limited thereto.

In some embodiments, the bracket 120 includes at least one supporting portion 121 that is suitable for supporting the wire portion 60 of the electronic device 50, and a second magnetic element 122 is disposed on each supporting portion 121. For example, the supporting portion 121 may be L-shaped to provide a space for storing the wire portion 60, but the present disclosure is not limited thereto. It should be understood that, although four supporting portions 121 are shown in the present embodiment, the bracket 120 in other embodiments may include more or fewer supporting portions 121. In some embodiments, the supporting portions 121 may be arranged at the same intervals to provide sufficient support for the wire portion 60 at various angles. The second magnetic elements 122 are disposed to facilitate storage of the wire portion 60 of the electronic device 50. The operation of the second magnetic elements 122 will be further described below.

In addition, in some embodiments, the supporting member 140 surrounds the bracket 120 and is suitable for supporting the wire portion 60 of the electronic device 50. The supporting member 140 may form a plurality of rings around the bracket 120, thereby accommodating the wire portion 60 in a minimized space. In some embodiments, an adhesive layer (not shown) may be disposed on the supporting member 140 to bond the wire portion 60 of the electronic device 50. In some embodiments, the supporting member 140 may include a magnetic material such that the supporting member 140 and the second magnetic elements 122 generate an attractive force. Since the supporting member 140 is engaged with the wire portion 60, the attraction force generated by the supporting member 140 and the second magnetic elements 122 is helpful for accommodating and positioning the wire portion 60 of the electronic device 50. However, the present disclosure is not limited thereto. In some embodiments, the supporting member 140 may include a metal material, thereby facilitating to support and protect the wire portion 60 of the electronic device 50.

In some embodiments, a plurality of first magnetic elements 150 are disposed on the supporting member 140. The first magnetic elements 150 are connected to the wire portion 60 of the electronic device 50 and the supporting member 140, so that the wire portion 60 is clamped on the supporting member 140. As shown in FIG. 1 and FIG. 2, in the stowed state, the first magnetic elements 150 are arranged along a linear direction, and the linear direction (for example, the X-axis or Y-axis direction) may be parallel to the radial direction of the bracket 120. At this time, the first magnetic elements 150 overlap the second magnetic elements 122 in the above direction. As a result, the first magnetic elements 150 and the second magnetic elements 122 can generate an attractive force (that is, they are magnetically connected to each other), which is helpful for storing and positioning the wire portion 60 of the electronic device 50. In some embodiments, the first magnetic elements 150 are arcshaped and surrounds the supporting member 140 and the wire portion 60 of the electronic device 50 supported on the supporting member 140. Specifically, the first magnetic elements 150 may surround the wire portion 60, and the notch of the first magnetic elements 150 may be disposed in a direction away from the bracket 120.

In addition, in some embodiments, the holding mechanism 100 further includes a cover member 160 and a holder 170. The cover member 160 may cover the connecting member 130 to protect the connecting member 130 from being damaged by external forces. The holder 170 may be disposed at the center of the bracket 120 and is suitable for accommodating the end portion 70 of the electronic device 50. In some embodiments, the holder 170 may be formed of a plastic material such as rubber to match the shape of the end portion 70 and protect the end portion 70 of the electronic device 50 from damage by external forces. However, the present disclosure is not limited thereto.

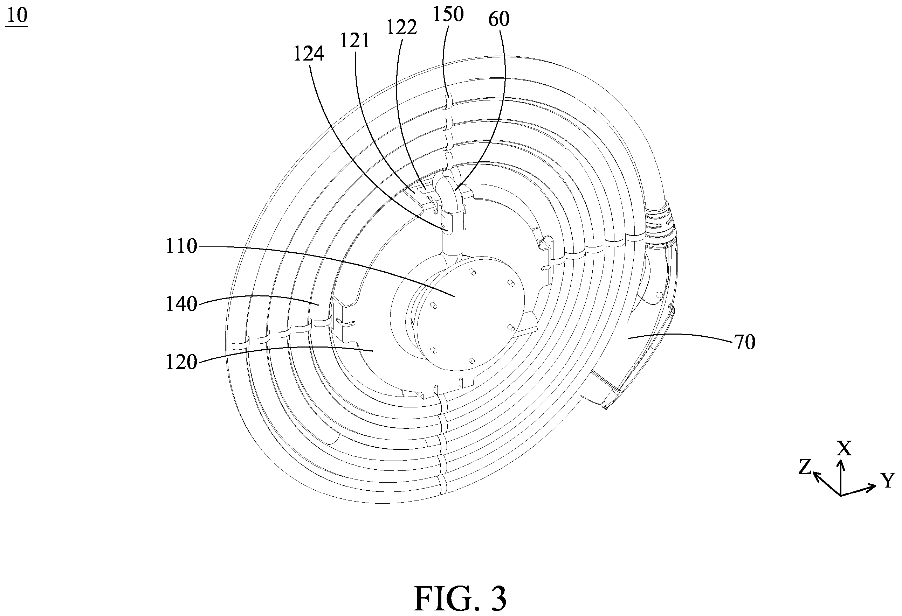

FIG. 3 is a perspective view of the charging system 10 in the stowed state in accordance with some embodiments of the present disclosure. As shown in FIG. 3, the bracket 120 includes a wire clip 124 that is suitable for clamping the wire portion 60 of the electronic device 50 to reduce the risk of displacement of the wire portion 60 and thus causing malfunction of the charging system 10. In some embodiments, in the stowed state, the wire clip 124 and the first magnetic elements 150 are disposed on the same straight line. However, the present disclosure is not limited thereto.

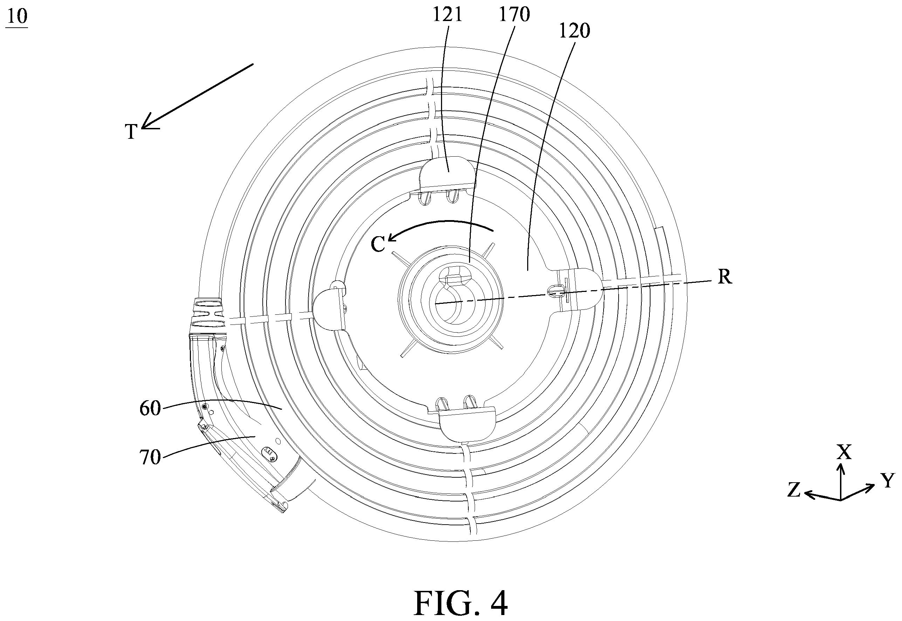

FIG. 4 is a perspective view of the charging system 10 in the stowed state in accordance with some embodiments of the present disclosure. As shown in FIG. 4, the bracket 120 is rotatable around the rotation axis R in a counter-clockwise direction (for example, the direction C) relative to the base 110, thereby facilitating the user to operate the electronic device 50. In addition, the user may stretch the wire portion 60 along a tangential direction (for example, the direction T) so that the wire portion 60 and the supporting member 140 extend away from the bracket 120, and connect the end portion 70 to a charging target for charging. However, the present disclosure is not limited thereto. In other embodiments, the bracket 120 is rotatable in a clockwise direction relative to the base 110, and the user can pull the wire portion 60 in any direction to operate the electronic device 50. It should be understood that when the user finishes using the electronic device 50, the wire portion 60 of the electronic device 50 can be positioned back to the stowed state through the attraction force generated by the first magnetic elements 150 (and/or the supporting member 140) and the second magnetic elements 122. The user does not need to apply force to operate the electronic device 50 to the stowed state. In this way, the electronic device 50 can be automatically returned to its original position, greatly improving the convenience for the user to restore the electronic device 50.

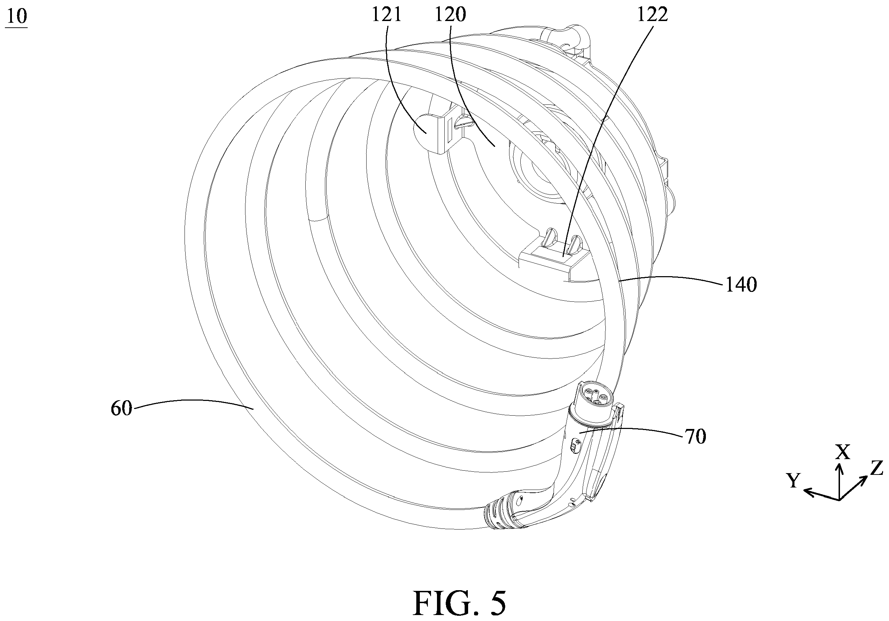

FIG. 5 illustrates a perspective view of the charging system 10 in the using state in accordance with some embodiments of the present disclosure. As shown in FIG. 5, in the using state, the supporting member 140 (and the wire portion 60 held thereon) may extend in the axial direction (for example, the Z-axis direction) of the bracket 120. In this way, it is convenient for the user to operate the electronic device 50 and connect the end portion 70 to the charging target for charging. In some embodiments, when in use, as the supporting member 140 is stretched, the diameter of the supporting member 140 will shrink in a direction away from the bracket 120. It should be understood that when the user finishes using the electronic device 50, the wire portion 60 of the electronic device 50 can be positioned back to the stowed state through the attraction force generated by the first magnetic elements 150 (and/or the supporting member 140) and the second magnetic elements 122. As set forth above, the electronic device 50 can be stretched and rotated in multiple directions, and the electronic device 50 can be automatically reset by the arrangement of the first magnetic elements 150, thereby improving the convenience of using and restoring the electronic device 50.

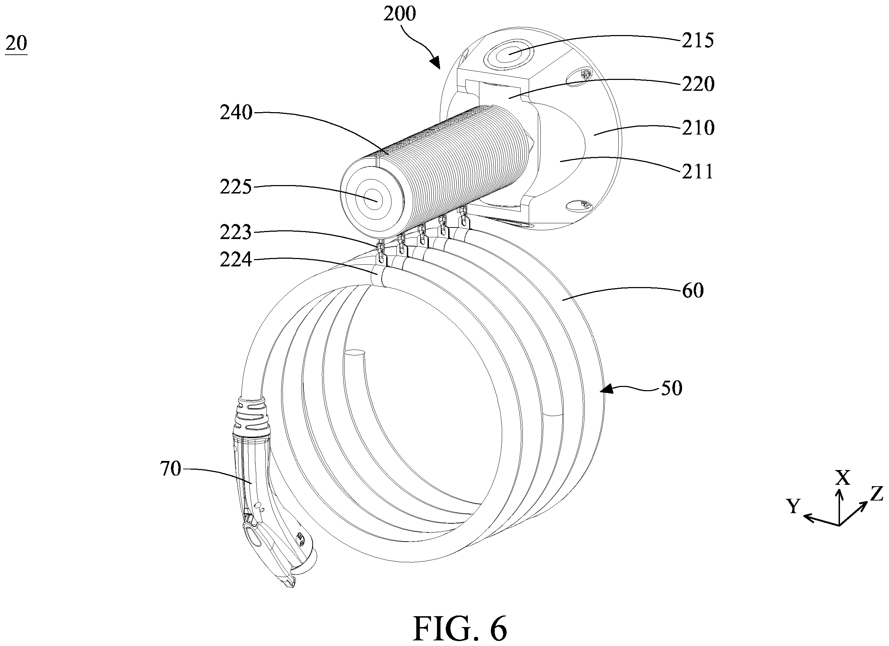

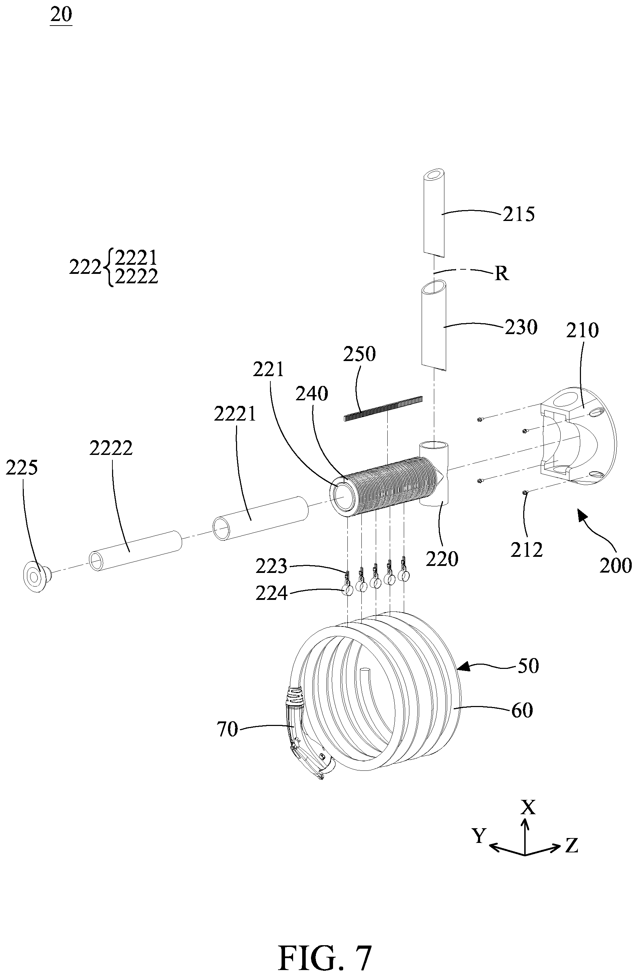

FIG. 6 illustrates a perspective view of the charging system 20 in the stowed state in accordance with some embodiments of the present disclosure. FIG. 7 illustrates an exploded view of the charging system 20 in accordance with some embodiments of the present disclosure. As shown in FIGS. 6 and 7, the charging system 20 may include an electronic device 50 and a holding mechanism 200 that is suitable for supporting the electronic device 50. As described above, the electronic device 50 can be a charging device and can include a wire portion 60 and an end portion 70 that are connected to each other, wherein the wire portion 60 can be electrically connected to a power source (not shown), and the end portion 70 can be installed and connected to a charging target (such as an electric motorcycle, car, bus, etc.). In this way, the user can charge the charging target via the electronic device 50 as required so that the charging target can continue to operate.

As shown in FIG. 6 and FIG. 7, the holding mechanism 200 includes a base 210, a shaft 215, a bracket 220, a connecting member 230, a supporting member 240 and a plurality of first magnetic elements 250. In some embodiments, the base 210 can be affixed on a plane (for example, a wall) via fasteners 212. The bracket 220 is connected to the base 210 and is rotatable relative to the base 210. The connecting member 230 is disposed between the base 210 and the bracket 220. Specifically, the shaft 215 passes through the base 210 and slides in the bracket 220, and the connecting member 230 is disposed between the shaft 215 and the bracket 220. In some embodiments, the connecting member 230 may include a plastic material and have smooth and wear-resistant properties, so that the bracket 220 is rotatable relative to the base 210 about the rotation axis R as the central axis (for example, along the X-axis). For example, the connecting member 230 may be made of polytetrafluoroethylene (PTFE) or other suitable plastic materials, but the present disclosure is not limited thereto. In addition, the base 210 includes two opposite recessed portions 211, and the bracket 220 is located between the recessed portions 211. In this way, the bracket 220 can be easily rotated to opposite sides, thereby improving the convenience of using the electronic device 50.

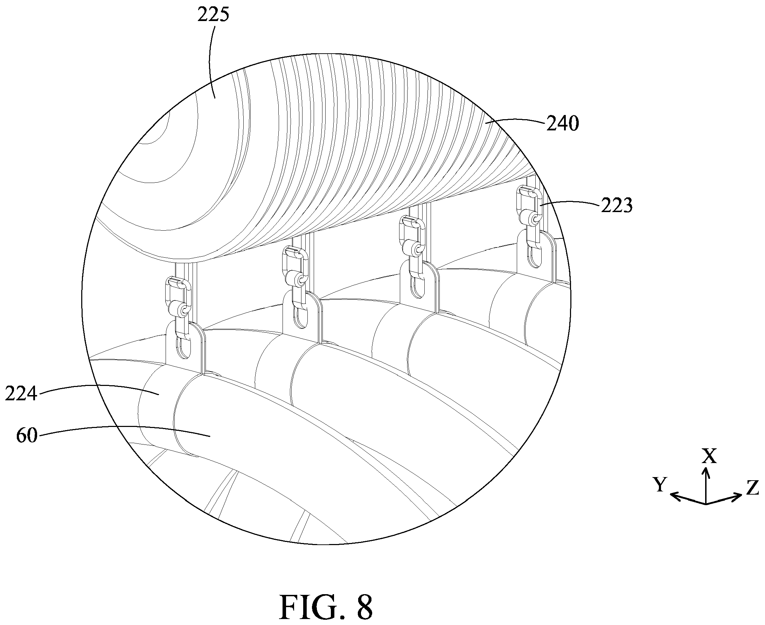

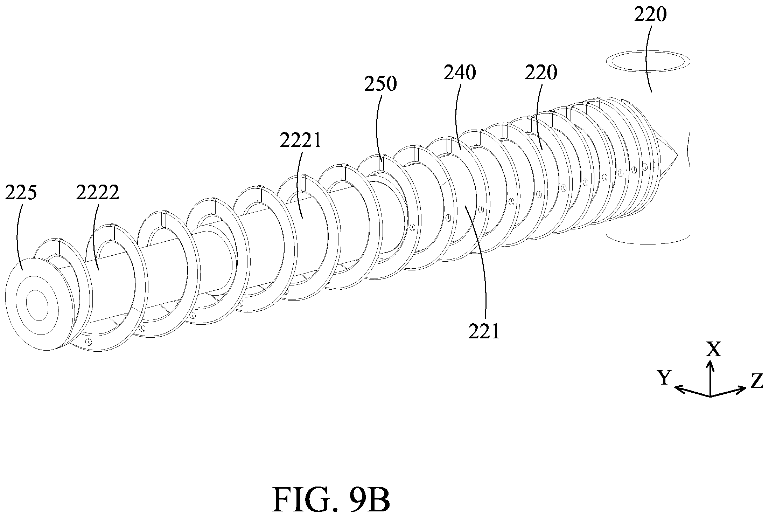

In addition, in some embodiments, the supporting member 240 surrounds the bracket 220 and is suitable for supporting the wire portion 60 of the electronic device 50. Specifically, the bracket 220 includes a first extension portion 221, and the first extension portion 221 extends from the bracket 220 toward a direction away from the base 210 (for example, the Z direction). The supporting member 240 surrounds the first extension portion 221 to be disposed on the bracket 220. The supporting member 240 is suitable for moving relative to the base 210 along the radial direction (for example, the Z-axis direction) that is perpendicular to the rotation axis R of the bracket 220. For example, the supporting member 240 may be a spring, and connected to the wire portion 60 through the buckle 223 and the clip 224. The connection method between the supporting member 240 and the wire portion 60 will be further described below with reference to FIG. 8. Referring to FIG. 9B, in some embodiments, a plurality of first magnetic elements 250 are disposed on the supporting member 240. As shown in FIGS. 6 and 7, in the stowed state, the first magnetic elements 250 are arranged along a linear direction and contact each other, and the linear direction (for example, the Z-axis direction) may be parallel to the axial direction of the bracket 220. In this way, the first magnetic elements 250 can generate an attractive force with each other, which is helpful for restoring and positioning the wire portion 60 of the electronic device 50. In some embodiments, the first magnetic elements 250 are each rectangular and embedded in the supporting member 240.

In addition, in some embodiments, the bracket 220 further includes at least one second extension portion 222, which is retractably connected to the first extension portion 221 and movable along the axial direction of the bracket 220. In this way, the user can move the electronic device 50 along the axial direction of the bracket 220, and in combination with the structure of the shaft 215, the user can use the electronic device 50 in various directions. It should be understood that, although two second extension portions 2221, 2222 are shown in the present embodiment, the bracket 220 in other embodiments may include more or fewer second extension portions 222.

FIG. 8 illustrates a partial enlarged view of the charging system 20 in accordance with some embodiments of the present disclosure. As shown in FIG. 8, the supporting mechanism 200 further includes a buckle 223 and a clip 224 arranged in pairs. In some embodiments, the buckle 223 is connected to the supporting member 240, the clip 224 clamps the wire portion 60, and the wire portion 60 is connected to the supporting member 240 through the buckle 223 and the clip 224. Specifically, the clip 224 surrounds the wire portion 60 of the electronic device 50 and is connected to the supporting member 240 through the buckle 223. In this way, the wire portion 60 can be moved to a position as the user demands along with the position of the supporting member 240.

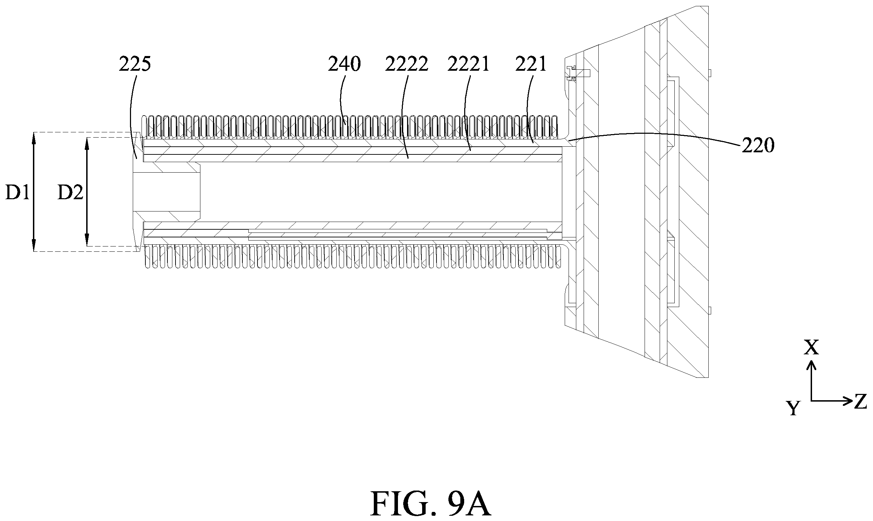

FIGS. 9A through 9C illustrate schematic views of various stages of operating the supporting mechanism 200 in accordance with some embodiments of the present disclosure. It should be noted that, for the sake of brevity, components such as the electronic device 50, the buckle 223 and the clip 224 are not shown in FIGS. 9A through 9C. As shown in FIG. 9A, the supporting mechanism 200 includes a cover member 225 that is connected to the extension portion 2222. In the stowed state, the supporting member 240 abuts against the cover member 225, and the wire portion 60 of the electronic device 50 is restored and positioned due to the attraction force generated by the first magnetic elements 250. In some embodiments, the diameter D1 of the cover member 225 is greater than the inner diameter D2 of the first extension portion 221 of the supporting member 240. In this way, the risk of the supporting member 240 being separated from the bracket 220 and causing the supporting mechanism 200 to fail can be reduced.

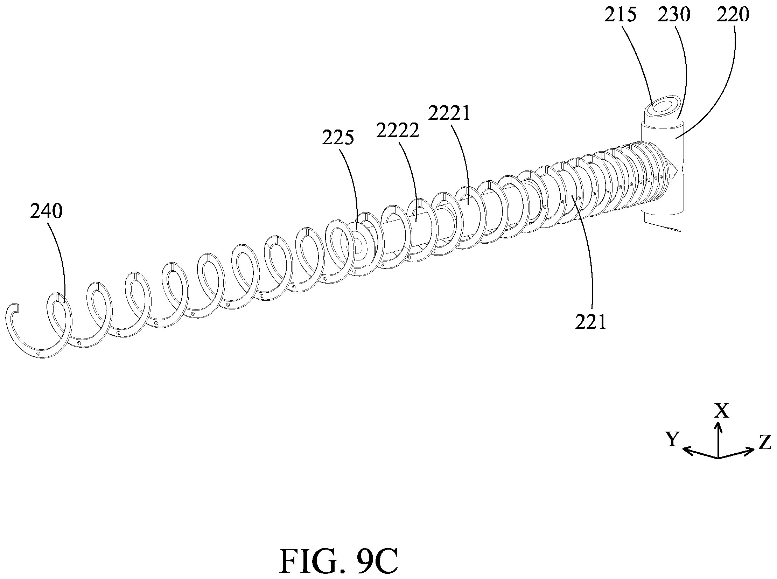

As shown in FIG. 9B, when the user starts to use the electronic device 50 for charging, the user can pull the wire portion 60 of the electronic device 50 and drive the supporting member 240 to push the cover member 225. At this time, the cover member 225 will drive the second extension portions 2221 and 2222 to move along the axial direction (for example, the Z-axis direction) of the bracket 220. As shown in FIG. 9C, when the user intends to further pull the wire portion 60 of the electronic device 50 beyond the extension range of the second extension portions 2221 and 2222, the supporting member 240 will be stretched beyond the cover member 225. Since the cover member 225 includes a flexible material, the supporting member 240 can deform the cover member 225 and continue to extend beyond the cover member 225.

It should be understood that when the user finishes using the electronic device 50, the wire portion 60 of the electronic device 50 can be positioned back to the stowed state through the attraction force generated between the first magnetic elements 250. The user does not need to apply force to restore the electronic device 50. Specifically, the supporting member 240 is attracted by the first magnetic elements 250 and returns to the stowed state. In the process of the supporting member 240 returning to the stowed state, the cover member 225 is also pushed to move toward the base 210. In this way, the electronic device 50 can be automatically returned to its original position, greatly improving the convenience for the user to restore the electronic device 50.

As set forth above, the present disclosure provides a supporting mechanism including a plurality of first magnetic elements disposed on a supporting member. In this way, the electronic device can be automatically returned to its original position by the arrangement of the first magnetic elements, thereby improving the convenience for users to restore the electronic device. In addition, the supporting mechanism includes a bracket that is rotatable relative to the base and the supporting member surrounding the bracket, thereby the electronic device can be stretched and rotated in multiple directions, thereby improving the convenience of users when using the electronic device.

While the embodiments and the advantages of the present disclosure have been described above, it should be understood that those skilled in the art may make various changes, substitutions, and alterations to the present disclosure without departing from the teaching and scope of the present disclosure. In addition, the scope of the present disclosure is not limited to the processes, machines, manufacture, composition, devices, methods and steps in the specific embodiments described in the specification. Those skilled in the art may understand existing or developing processes, machines, manufacture, compositions, devices, methods and steps from some embodiments of the present disclosure. As long as those may perform substantially the same function in the aforementioned embodiments and obtain substantially the same result, they may be used in accordance with some embodiments of the present disclosure. Therefore, the scope of the present disclosure includes the aforementioned processes, machines, manufacture, composition, devices, methods, and steps. Furthermore, each of the appended claims constructs an individual embodiment, and the scope of the present disclosure also includes every combination of the appended claims and embodiments.

## Claims

1. A holding mechanism (100, 200), comprising:
a base (110, 210);
a bracket (120, 220) connected to the base (110, 210) and rotatable relative to the base (110, 210);
a connecting member (130, 230) disposed between the base (110, 210) and the bracket (120, 220);
a supporting member (140, 240) disposed around the bracket (120, 220); and
a plurality of first magnetic elements (150, 250) disposed on the supporting member (140, 240).

2. The holding mechanism (100, 200) as claimed in claim 1, wherein the first magnetic elements (150, 250) are arranged along a radial direction, and the radial direction is perpendicular to a rotation axis of the bracket (120, 220).

3. The holding mechanism (100, 200) as claimed in claim 1, wherein the supporting member (140, 240) is movable relative to the base (110, 210) along an axial direction, and the axial direction is parallel to a rotation axis of the bracket (120, 220).

4. The holding mechanism (100, 200) as claimed in claim 3, wherein the bracket (120, 220) comprises a supporting portion (121) and a second magnetic element (122), and the second magnetic element (122) is disposed on the supporting portion (121) and is magnetically connected with the first magnetic elements (150, 250).

5. The holding mechanism (100, 200) as claimed in claim 1, wherein the supporting member (140, 240) is movable relative to the base (110, 210) along a radial direction, and the radial direction is perpendicular to a rotation axis of the bracket (120, 220).

6. The holding mechanism (100, 200) as claimed in claim 5, further comprising a shaft (215) passing through the base (110, 210) and the bracket (120, 220), and the connecting member (130, 230) is disposed between the shaft (215) and the bracket (120, 220).

7. The holding mechanism (100, 200) as claimed in claim 5, wherein the bracket (120, 220) further comprises a first extension portion (221), the first extension portion (221) extends from the bracket (120, 220) in a direction away from the base (110, 210), and the supporting member (140, 240) is disposed on the first extension portion (221).

8. The holding mechanism (100, 200) of claim 7, wherein the bracket (120, 220) further comprises a second extension portion (222), and the second extension portion (222) is retractably connected to the first extension portion (221).

9. The holding mechanism (100, 200) of claim 8, further comprising a cover member (225) disposed at one end of the second extension portion (222), and the supporting member (140, 240) abuts against the cover member (225).

10. The holding mechanism (100, 200) of claim 9, wherein a diameter of the cover member (225) is greater than an inner diameter of the supporting member (140, 240).

11. The holding mechanism (100, 200) as in claim 5, wherein the supporting member (140, 240) is a spring.

12. A charging system (10, 20), comprising:
an electronic device (50) comprising a wire portion (60); and
a holding mechanism (100, 200), comprising:
a base (110, 210);
a bracket (120, 220) connected to the base (110, 210) and rotatable relative to the base (110, 210);
a connecting member (130, 230) disposed between the base (110, 210) and the bracket (120, 220);
a supporting member (140, 240) disposed around the bracket (120, 220) and suitable for supporting the wire portion (60) of the electronic device (50); and
a plurality of first magnetic elements (150, 250) disposed on the supporting member (140, 240).

13. The charging system (10, 20) as claimed in claim 12, wherein the supporting member (140, 240) is movable relative to the bracket (120, 220) along an axial direction, and the axial direction is parallel to a rotation axis of the bracket (120, 220),
wherein the first magnetic elements (150, 250) are connected to the wire portion (60) of the electronic device (50) and the supporting member (140, 240) so that the wire portion (60) is clamped to the supporting member (140, 240).

14. The charging system (10, 20) as claimed in claim 12, wherein the supporting member (140, 240) is movable relative to the bracket (120, 220) along a radial direction, and the radial direction is parallel to a rotation axis of the bracket (120, 220),
wherein the holding mechanism (100, 200) comprises a buckle (223) and a clip (224) arranged in a pair, the buckle (223) is connected to the supporting member (140, 240), the clip (224) clamps the wire portion (60), and the wire portion (60) is connected to the supporting member (140, 240) via the clip (224) and the buckle (223).

15. The charging system (10, 20) as claimed in claim 14, wherein the bracket (220) further comprises a first extension portion (221) and a second extension portion (222) retractably connected to the first extension portion (221), the first extension portion (221) extends from the bracket (120 , 220) in a direction away from the base (110, 210), and the supporting member (140, 240) is disposed on the first extension portion (221).

## Amended claims

### Amended claims in accordance with Rule 137(2) EPC.

1. A charging system (10, 20), comprising:
an electronic device (50) comprising a wire portion (60); and
a holding mechanism (100, 200), comprising:
a base (110, 210);
a bracket (120, 220) connected to the base (110, 210) and rotatable relative to the base (110, 210);
a connecting member (130, 230) disposed between the base (110, 210) and the bracket (120, 220);
a supporting member (140, 240) disposed around the bracket (120, 220); and
a plurality of first magnetic elements (150, 250) disposed on the supporting member (140, 240).

2. The charging system (10, 20) as claimed in claim 1, wherein the first magnetic elements (150, 250) are arranged along a radial direction, and the radial direction is perpendicular to a rotation axis of the bracket (120, 220).

3. The charging system (10, 20) as claimed in claim 1, wherein the supporting member (140, 240) is movable relative to the base (110, 210) along an axial direction, and the axial direction is parallel to a rotation axis of the bracket (120, 220).

4. The charging system (10, 20) as claimed in claim 3, wherein the bracket (120, 220) comprises a supporting portion (121) and a second magnetic element (122), and the second magnetic element (122) is disposed on the supporting portion (121) and is magnetically connected with the first magnetic elements (150, 250).

5. The charging system (10, 20) as claimed in claim 1, wherein the supporting member (140, 240) is movable relative to the base (110, 210) along a radial direction, and the radial direction is perpendicular to a rotation axis of the bracket (120, 220).

6. The charging system (10, 20) as claimed in claim 5, further comprising a shaft (215) passing through the base (110, 210) and the bracket (120, 220), and the connecting member (130, 230) is disposed between the shaft (215) and the bracket (120, 220).

7. The charging system (10, 20) as claimed in claim 5, wherein the bracket (120, 220) further comprises a first extension portion (221), the first extension portion (221) extends from the bracket (120, 220) in a direction away from the base (110, 210), and the supporting member (140, 240) is disposed on the first extension portion (221).

8. The charging system (10, 20) as claimed in claim 7, wherein the bracket (120, 220) further comprises a second extension portion (222), and the second extension portion (222) is retractably connected to the first extension portion (221).

9. The charging system (10, 20) as claimed in claim 8, further comprising a cover member (225) disposed at one end of the second extension portion (222), and the supporting member (140, 240) abuts against the cover member (225).

10. The charging system (10, 20) as claimed in claim 9, wherein a diameter of the cover member (225) is greater than an inner diameter of the supporting member (140, 240).

11. The charging system (10, 20) as claimed in claim 5, wherein the supporting member (140, 240) is a spring.

12. The charging system (10, 20) as claimed in claim 1,
wherein the first magnetic elements (150, 250) are connected to the wire portion (60) of the electronic device (50) and the supporting member (140, 240) so that the wire portion (60) is clamped to the supporting member (140, 240).

13. The charging system (10, 20) as claimed in claim 1,
wherein the holding mechanism (100, 200) comprises a buckle (223) and a clip (224) arranged in a pair, the buckle (223) is connected to the supporting member (140, 240), the clip (224) clamps the wire portion (60), and the wire portion (60) is connected to the supporting member (140, 240) via the clip (224) and the buckle (223).
